Europäisches Patentamt

European Patent Office

Office européen des brevets

(19)

(11) **EP 1 018 273 B1**

(12) **EUROPEAN PATENT SPECIFICATION**

(45) Date of publication and mention
of the grant of the patent:
**30.08.2006 Bulletin 2006/35**

(21) Application number: **98951473.2**

(22) Date of filing: **25.09.1998**

(51) Int Cl.:
*H04Q 3/68* (2006.01)        *H04Q 11/06* (2006.01)

(86) International application number:
**PCT/EP1998/006133**

(87) International publication number:
**WO 1999/017559 (08.04.1999 Gazette 1999/14)**

(54) **METHOD AND APPARATUS FOR CONTROLLING A SWITCHING DEVICE**

VERFAHREN UND VORRICHTUNG ZUM STEUERN EINER SCHALTVORRICHTUNG

PROCEDE ET APPAREIL DE COMMANDE D'UN DISPOSITIF DE COMMUTATION

(84) Designated Contracting States:
**ES FR GB IT**

(30) Priority: **26.09.1997 DE 19742656**

(43) Date of publication of application:
**12.07.2000 Bulletin 2000/28**

(73) Proprietor: **TELEFONAKTIEBOLAGET LM
ERICSSON (publ)
164 83 Stockholm (SE)**

(72) Inventor: **LARSSON, Peter
S-169 71 Solna (SE)**

(74) Representative: **HOFFMANN EITLE
Patent- und Rechtsanwälte
Arabellastrasse 4
81925 München (DE)**

(56) References cited:
**EP-A- 0 055 944        EP-A- 0 384 961
EP-A- 0 781 021        WO-A-95/32599
US-A- 4 417 244**

• **PATENT ABSTRACTS OF JAPAN vol. 096, no.
003, 29 March 1996 & JP 07 312790 A (NEC
CORP.), 28 November 1995**

**Description**

**[Field of the Invention]**

The present invention relates to switching devices and, in particular, the present invention relates to a method and apparatus for controlling a blocking switching device in a communication network.

**[Background of the Invention]**

In a communication network serving a large number of users or devices, communication links between pairs of devices or groups of devices are established on demand. The connections are usually temporary and are requested at arbitrary times.

Therefore, in a communication network each served subscriber or device is preferably connected to a terminal of a switching device able to connect its terminals on demand. For example, if a subscriber of a telecommunication network picks up the handset of a telephone and dials a number of a desired party, a switching device connects respective internal lines to establish a path from the calling party to the called party.

Switching devices for communication networks have undergone significant changes in the past due to the advent of integrated circuit techniques. Early bulky mechanical devices are now largely replaced by semiconductor devices allowing a wide variety of design approaches for switching devices.

It is possible to design switching devices such that at the same time all subscribers can be provided with a communication line to an arbitrary desired other subscriber, provided the called subscriber is available. Such a switching devices may be designed as a matrix of lines where each subscriber is connected to a specific line constituting a row or a column of the matrix. Connections are established by simply connecting respective cross points of the matrix, for example by a transistor.

Since connection between two parties is thus established by closing a single cross point, switching devices of this type are called single-stage structures.

Provided the called party is available, single-stage structures can always serve a connection request, even if all devices request a connection at the same time. A called device can always be reached since there is a single cross-point reserved for each possible interconnection. Because of this characteristic of full accessibility single-stage structures are called non-blocking.

In a single-stage structure it is an advantage that for any connection between two subscribers only a single cross point connection is required. However, at the same time it is a disadvantage that a specific cross point is needed for a connection between two specific subscribers because, if that cross point should fail, there isn't any other way to establish the connection. Further, and more importantly, the number of cross points needed becomes prohibitively large for large numbers of subscribers. Moreover, the hardware of a single stage switch is not used very economically, even if all lines are in use at a time, only one cross point in each row or in each column is in use. Further, in practical cases, at a certain given time, usually only a small number of subscribers actually requests a line and thus only a small part of the switch is actively in use.

In view of the disadvantages of the single-stage structure with respect to size and cost, in many cases multi-stage structures are in use as switching devices. Multi-stage structures can be constructed by arranging a multitude of small single-stage structures in a matrix and interconnecting the single-stage structures appropriately. Multi-stage structures might introduce blocking if a condition is not fulfilled. However, the non-blocking ability is sacrificed in favor of lowered cots, less hardware, etc.

As a practical matter it is both reasonable and necessary to accept occasional blocking of a call, since allowing of such blocking enables reducing the number of cross points.

In communication networks the possibility of a blocked connection may be expressed by a blocking probability at a defined maximum load. At loads below the maximum load the blocking probability is lower, i.e., it is less likely, that a requested connection cannot be established. In order to maintain a certain level of service, e.g., in telecommunication networks, the blocking probability will be kept at a certain acceptable level balancing the advantages of cost savings through hardware reduction and the disadvantages of not providing full access to subscribers. Obviously, it is desirable to reduce hardware costs to a minimum while maintaining the blocking probability at a fixed acceptable level.

For example, US 4417244 describes automatic path rearrangement in a multi-stage switching device for avoiding transmission dropout of an otherwise blocked path and to provide a non-blocking switching device. During the rearranging of particular paths via the switching device, in order to free up a blocked connection, calls are temporarily routed via two call-rearranging buses.

However, the call-rearranging buses only allow to temporarily provide a path for a call during rerouting of the call and do not provide additional resources for connections. Another switching device that avoids blocking by rearranging connections is disclosed in EP-A-0 055 944.

In most today's digital networks communication between parties is conducted using multiplexing techniques. Multiplexing enables the use of new techniques for interconnecting parties or devices in a communication network. With multiplexing techniques, a unit of transmission time on a communication channel is partitioned into a plurality of time slots, controlled by a multiplexer and demlutiplexer connected to the ends of the communication channel. Thus, by sequentially assigning a respective time slot of each unit of transmission time to each particular call, a large number of calls may be placed on said communication channel.

Even though in the case of many different paths for a desired connection blocking is less likely, it still can occur and it is desirable to design an essentially non-blocking switching device, while keeping size and costs of the switching device at a reasonable level.

In a digital network using multiplexing techniques for transmitting a plurality of calls on a single line, for example, samples of a first call can be placed on a first time slot of each unit of transmission time on the line by the multiplexer and the demultiplexer then can transmit the first call by transmitting samples received during the first time slot to the desired party. Similarly, the multiplexer could place the second call on a second time slot and the demultiplexer could establish the call by transferring samples from the second time slot to the desired party. All other calls could be processed analogously.

In case it is now desired to provide a connection between a party assigned to the first time slot and a party assigned the second time slot, this can be conveniently accomplished by interchanging the time slots without a physical switching of lines. An incoming sample received during the first time slot could simply be transferred to the second time slot, instead of being transferred to the first time slot. The interchanging of time slots is usually accomplished in time modules providing intermediate storage for samples on incoming time slots in order to write said stored sample onto a desired outgoing time slot. In the above example, the samples of the first time slot would be intermediately stored and subsequently written on the second time slot.

Thus, two basic types of switching devices can be distinguished, one of which being time modules employing time slot interchanging for providing a communication path and the other being space modules providing physical connections.

Further, switching devices exist which combine both basic techniques for providing connections, i.e., combine space and time switching. Such switches usually provide good accessibility at low costs and are widely in use, e.g., in communication networks.

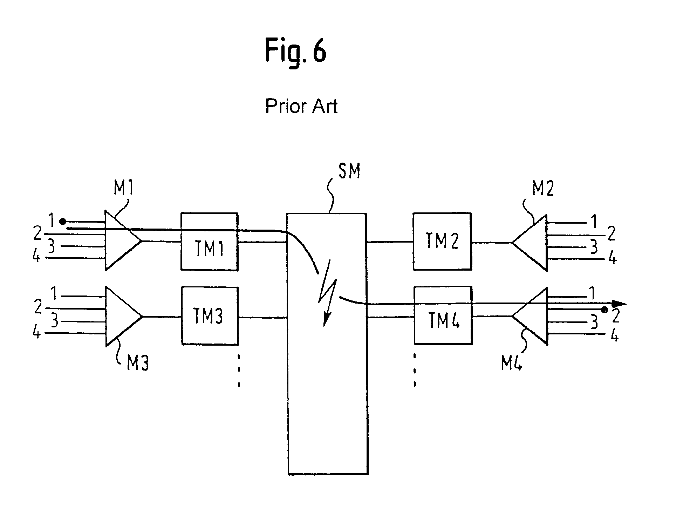

A combination of time switching and space switching is shown in Fig. 6. Fig. 6 illustrates a known switching device with a potentially blocking space module sandwiched between sets of time modules. The switching device has a so-called time space time (TST) structure. It provides a large number of different paths for a given connection and hence, while blocking is still possible, the likelihood of blocking is reduced. Other arrangements of time modules and space modules are possible, for example space time space sequences of modules, called STS arrangements. Further switching architectures can be obtained by permuting space and time modules in every imaginable way, e.g., as SSS, STTS, TSST or TSTST switches and the like.

The known switching device of Fig. 6 includes a space module SM sandwiched between time modules TM1, TM3 and time modules TM2 and TM4. Four multiplexers M1 to M4 are connected to the time modules TM1 to TM4. In the example of Fig. 6, each multiplexer is shown to have four incoming lines from devices. If a connection is to be established between input 1 of multiplexer M1 and input 2 of multiplexer M4, a variety of possibilities exist to provide a path by appropriately interchanging time slots on time module TM1 and time module TM4 and by appropriately switching the space module SM.

However, depending on the utilization of the switching device, it can occur that the required connection between the device 1 connected to the first multiplexer M1 and device 2 connected to the fourth multiplexer M4 cannot be provided. This poses problems especially in networks allowing semi-permanent calls, since semi-permanent calls cause an overall high loading of the switch, thereby increasing the risk for blocking more than on demand calls do.

To remedy the above problems, a larger number of space modules could be provided. Further, a larger number of time modules could be provided such that the load is decreased for each time module or space module or the number of active lines/subscribers, who can access the time module or space module, could be decreased. This, however, either increases costs or reduces the number of possible subscribers.

**[Summary of the Invention]**

It is therefore object of the present invention, to provide a switching device for a communication network at low cost, while maintaining a high level of accessibility.

This object of the invention is solved by the features of claim 1 and claim 7.

Advantageously, in addition to components of known switching devices, such as time modules or space modules, the switching device according to the invention comprises alternate path means connected to terminals of the space modules or time modules. Said alternate path means provide a additional resources for establishing a path between two devices or subscribers, in case blocking occurs.

This increases accessibility and/or utilization of the switching device, and it becomes possible to provide a virtually non-blocking switching device at low costs. In the prior art such an increased accessibility and utilization could only be achieved by providing further space modules and/or by providing larger numbers of time modules. As opposed to that, the provision of alternate path means AP enables a reduction of hardware costs, since the utilization of the switch and/or the accessibility of the switch for externally connected devices or parties can be increased by said alternate path means while requiring less additional hardware than in the prior art.

In advantageous embodiments of the invention the time modules and space modules of the switching device can be arranged to form a time space time, space time space, time space space time sequences, or any other combination of time modules and space modules, whereby said alternate path means are connected to at least one of the space modules or time modules.

Said alternate path means provide an alternate path for an otherwise blocked connection of the switching device and can advantageously comprise at least one anti blocking time module for interchanging or looping time slots on respective terminals of the switching module connected thereto. Further, external terminal devices can be connected to at least one of said anti blocking time modules for further providing means for interchanging or looping time slots on outputs of anti blocking time modules. Further, said alternate path means can comprise means for connecting at least two anti-blocking time modules and/or anti-blocking external terminal devices with each other.

In yet another advantageous embodiment of the switching device according to the invention said alternate path means can be constituted by at least one of said plurality of time modules or external devices.

The method of controlling a switching device according to the present invention advantageously allows to determine an alternate path between two devices via said alternate path means involving interchanging of time slots in said alternate path means and to establish said alternate connection, in case a direct path via the time modules and the at least one space module of the switching device is not available.

The alternate path for providing an otherwise blocked connection may be established by control means via at least one anti blocking time module connected to the at least one space module of the switching device. The alternate path may also be established via external devices connected to said alternate path means or via an interface towards a device. Establishing may include a moving of occupied time slots in order to free required time slots.

Advantageously, said alternate path may also be established via said time modules and/or external terminal devices of the switching device with low load.

Said alternate path may also be established via free time slots towards and from said alternate path means or may be established by using time slots already occupied by connections for the transmission of signals and by moving said already established connections to other time slots on said time modules or external terminal means.

In yet another advantageous embodiment of the method of the invention said alternate path may be established via an anti blocking time module with a lowest probability of reject of the connection, the probability of reject being determined by control means.

Further embodiments and advantageous of the invention are described in further dependent claims.

The invention may be more fully understood in conjunction with the accompanying drawings.

**[Brief Description of the Drawings]**

Fig. 1a          shows a first embodiment of the switching device according to the present invention.

Fig. 1b          shows a second embodiment of the switching device according to the invention.

Fig. 2a to Fig. 2e    show embodiments of alternate path means for providing an alternate path for an otherwise blocked connection.

Fig. 3           shows a third embodiment of the switching device according to the invention.

Fig. 4           shows a time diagram of steps for interchanging time slots using an anti blocking time module if a regular connection is blocked.

Fig. 5           shows a block diagram illustrating the method of controlling the switching device according to the present invention.

Fig. 6           shows a known switching device.

**[Detailed Description of the Embodiments]**

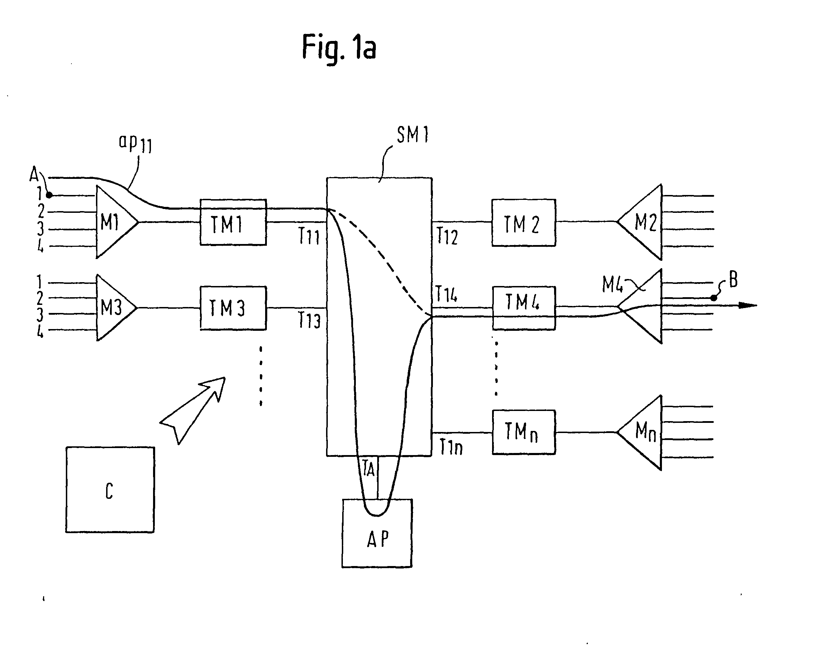

In the following, a first embodiment of invention is described with respect to Fig. 1a. Fig. 1a shows a switching device for simultaneously providing a plurality of connections between a plurality of parties. A switching device of this type can, for example, be used in telecommunication networks.

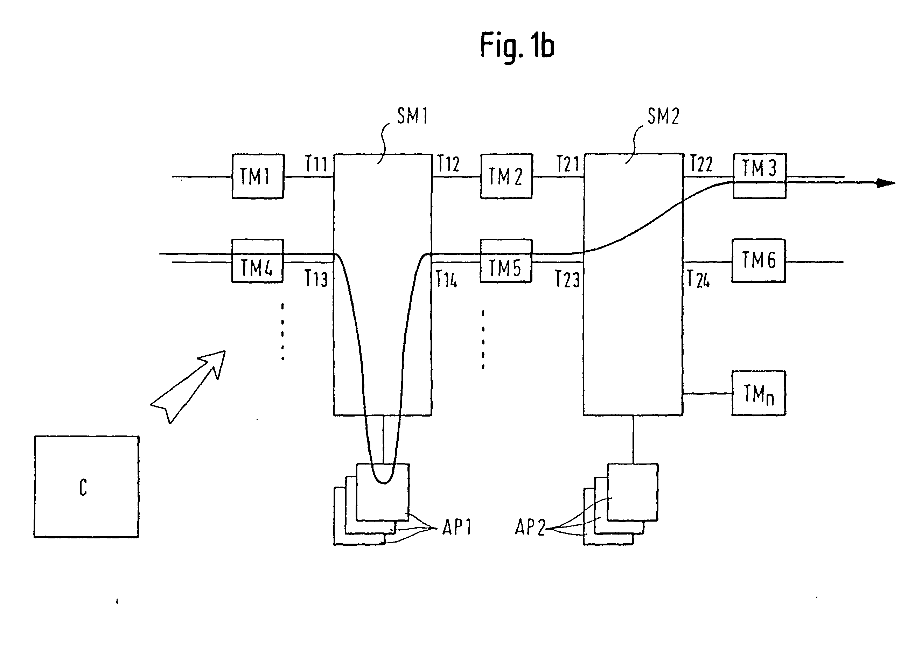

A plurality of time modules TM1-TMn for interchanging time slots is connected to terminals T11-T1n of a space module SM1. The time modules TM1-TMn are also connected to a plurality of multiplexers M1-Mn. In the embodiment of Fig. 1a each of the multiplexers multiplexes has four lines 1 - 4. These lines can, e.g., be connected to devices such as telephones. It is understood that a larger number of parties, e.g. 16, may be connected to each of the multiplexers. Further, the number lines of the multiplexers in Fig. 1 may differ from each other.

Further, according to the invention, in the embodiment of Fig. 1, anti blocking means AP for providing additional resources for interchanging time slots are connected to the space module SM1 via at least one terminal TA of the space module. The alternate path means AP provides alternate paths for blocked connections and it becomes possible to provide a virtually non-blocking switch. Control means C are provided for controlling operations of the switching device via control lines (not shown), as illustrated by an arrow.

The space module SM1 of the shown embodiment is constituted by a number of switching matrices or switching modules mutually connected to each other, in order to provide connections between arbitrary pairs of the terminals T11-T1n of the space module. It is assumed that the space module SM1 is a potentially blocking one, i.e., the maximum number of connections, which can simultaneously be provided between pairs of terminals, is smaller than the number of parties or devices connected to the space module, or smaller than half the number of parties or devices, in case two separate connections are used for a bidirectional communication during a call. As outlined above, the use of a potentially blocking switching device, however, allows to reduce hardware costs for the switching device significantly.

The time modules TM1-TMn are connected between the space module SM1 and the multiplexers M1-Mn and provide means for interchanging time slots on the respective connections, as outlined in the introductory section. If, for example, four parties are connected to each multiplexer on the line towards the time modules TM1 - TM4, four multiplexed connections are served by each time module, via four sequential time slots each. Said multiplexers do not necessarily have to be directly connected to the time modules, other devices for transmitting multiplexed signals may be connected instead.

The time modules have the capability to interchange time slots, i.e., the contents of time slots can be freely interchanged by intermediately storing data samples received on an incoming time slot of a time module and providing said intermediately stored sample on a desired output time slot. The time modules can also have the ability to loop time slots, i.e., the time module can return data back to the sending device. This can, if desired, include interchanging of time slots.

In the following, the operation of the switching device according to the first embodiment is described with respect to Fig. 1a.

During the operation of the switch, as an example, a party denoted A in Fig. 1a, connected to the first time slot of multiplexer M1 requests a connection to a second party, denoted B and connected to the second time slot of the fourth (de-) multiplexer M4. Controlled by the control means C, the space module SM1 appropriately switches connections in order to establish a path between the terminals T11 and T14 and further, the first time module TM1 and the fourth time module TM4 appropriately interchange time slots in order to establish the desired path for parties A and B.

However, if said control means C has to serve a large number of connection requests, since the switching device is a potentially blocking one, it may occur that an appropriate path between said first time slot on the first time module TM1 and said second time slot on the fourth time module TM4 cannot be established and blocking occurs. In other words, said space module SM1, said first time module TM1 and said fourth time module TM4 do not have the resources to provide a path between the first time slot on the first multiplexer M1 and the second time slot of the fourth multiplexer M4. The blocked connection between party A and party B is illustrated in Fig. 1a by a dashed line.

According to the invention, therefore, controlled by said control means C, an alternate path is established via said alternate path means AP, in order to provide the otherwise blocked connection. Said alternate path means AP is connected to at least one of the plurality of terminals of the space module SM1 for providing a path between two arbitrary time slots on the said at least one of the plurality of terminals of the space module. Thus, the alternate path means AP provides an additional resource to loop or to interchange time slots carrying samples of signals with respect to certain parties, in the above case parties A and B.

It is noted that for a two way call a similar path is provided in the other direction as well.

If it is assumed that the alternate path means is only moderately used for routing traffic, a high probability exists that the desired path between the first time slot on multiplexer M1 and the second time slot on multiplexer M4 can be provided via said alternate path means AP.

The alternate path between the two parties A and B via said alternate path means AP is established under control of said control means C and includes a connection between terminals T11 and T14 and the at least one terminal TA of the space module SM1. Further, the control means C will appropriately arrange the interchange of time slots in the first time module TM1, the fourth time module TM4 and said alternate path means AP. The alternate path is indicated in Fig. 1a by the solid arrow denoted ap11.

The above example only considered blocking for a single connection request between two parties, however, in practical cases said alternate path means AP is able to loop and/or interchange a large number of time slots in order to provide a plurality of otherwise blocked connections.

In the prior art such an increased accessibility and utilization could only be achieved by providing a space module with larger resources and/or providing larger number of time modules. As opposed to that, the invention provides alternate path means AP and thus enables a reduction of hardware costs. The utilization of the switch and/or the accessibility of the switch for externally connected devices or parties can be increased by merely adding said alternate path means, requiring less additional hardware than in the prior art. According to the invention it is possible to design a virtually non-blocking switching device, e.g., as needed for networks using semi-permanent connections.

In the following, another embodiment of the switching device according to the invention is described with respect to Fig. 1b.

In Fig. 1b for corresponding parts the same reference signs are used as in Fig. 1a. In Fig. 1b two space modules SM1 and SM2 are connected to each other via a plurality of time modules, of which time modules TM2 and TM5 are shown. The space modules are further connected to multiplexers or external devices (not shown) via additional time modules, of which time modules TM1, TM3, TM4 and TM6 are illustrated. The sequence of time modules and space modules of the illustrated embodiment forms a time space time space time sequence of modules. Of course, as before, other sequences of time modules and space modules may be employed instead, e.g., just to name a few examples, a TTT, SSS, STTS, TSST, TSTST sequence or the like. Further, a path does not necessarily have to employ the modules in the above TSTST sequence of modules. For example, if a path is looped in a time module, this is equal to a time time sequence and thus, in this case, this path follows a TSTTSTST sequence of modules.

Said space module SM1 is connected to first alternate path means AP1 constituted by three units and space module SM2 is connected to second alternate path means AP2 also constituted by three units. The first and second alternate path means AP1 and AP2 provide alternate paths for blocked connections.

As an explanatory example, in Fig. 1b an alternate path for a blocked connection between a particular time slot input to the fourth time module TM4 and another particular time slot on the third time module TM3 is shown, illustrated by an arrow. In the example, it is assumed that a regular path can neither be provided via a direct connection of terminals T13 and T14 of space module SM1 nor by interchanging time slots on any of the involved time modules. Further it is assumed that it is not possible to establish a direct path for said time slot on the fourth time module TM4 and said time slot on the third time module TM3 via the second time module TM2 or any other time module (not shown) connecting the first space module SM1 and the second space module SM2.

However, said alternate path means AP1 provides the resource to connect appropriate time slots on the fourth time module TM4 and the fifth time module via said first space module SM1. Alternate options may exist, for example to provide an alternate path between said time slot on the fourth time module TM4 and said time slot on the third time module TM3 via said alternate path means AP1 and the second time module TM2 and to provide an alternate path via said first and/or second alternate path means AP1, AP2. The control means C is responsible for selecting an appropriate alternate path in case the direct path is blocked.

It is understood that the embodiments shown in the Figs. 1a and 1b only show possible arrangements of time modules, space modules and alternate path means. In other embodiments, space modules and time modules can be arranged to form sequences different from the time-space-time sequence shown in Fig. 1a and the time-space-time-space-time sequence shown in Fig. 1b. For example time modules and space modules could be arranged to form a space-time-space sequence or any other combination of space and time modules. Further, it is understood that said alternate path means can be comprised of a plurality of units connected to at least one space module or time module of the switching device.

In a further embodiment of the invention said alternate path means is constituted by at least one anti blocking time module AB-TM capable of interchanging or looping time slots similar to regular time modules. In this case the at least one anti blocking time module provides the additional resource needed for establishing otherwise blocked connections. Since the cost of time modules is low compared to other components of a switching device, alternate paths can advantageously provided using anti blocking time modules.

By providing a pool of alternative paths via one or several anti blocking time modules, wherein each anti blocking time module has the capability of looping traffic, this pool can be used whenever a direct path between two subscribers or devices.

If the ratio of anti blocking time modules and time modules is dimensioned such that the anti blocking time modules are not heavily utilized, the probability of being able to set up a connection between a heavily loaded time module via a not heavily loaded anti blocking time module and then to another heavily loaded time module becomes high.

This pushes the load limit, imposed by the accepted blocking level, upwards and results in a virtually non blocking switch, if dimensioned correctly. Mathematically, if the probability is $P_{XX}$ for blocking between two ordinary time modules and $P_{XY}$ is the probability for blocking between an ordinary time module and one anti blocking time module, then with a number of M anti blocking time modules a rough estimate of the overall blocking probability gives

$$P_{xyx} = 1-(1-P_{xy})^2$$

$$P_{tot} = P_{xx} \cdot P_{xyx}^M$$

The lower $P_{xyx}$ is the lower $P_{tot}$ becomes. $P_{xy}$ and hence $P_{xyx}$ is very small for moderate loads. When M increases, $P_{tot}$ is lowered.

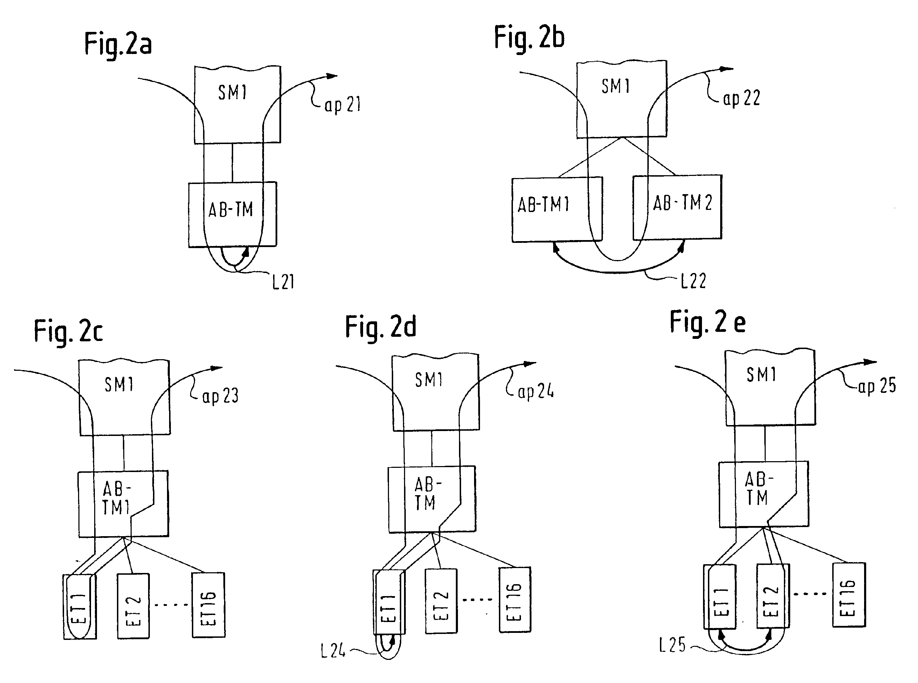

In the following, several embodiments of a part of the switching device according to the invention are described with respect to Figs. 2a-2e.

In Fig. 2a said alternate path means AP is constituted by at least one anti blocking time module AB-TM and two terminals of said at least one anti blocking time module are connected to each other by an external link L21. Said external link can, e.g., be constituted by a cable and provides additional means to interchange and/or loop time slots, as required for providing an alternate path. An example for an alternate path is indicated by an arrow denoted ap21.

Fig. 2b shows another embodiment of said alternate path means AP. In this case said alternate path means comprises a plurality of anti blocking time modules, of which a first anti blocking time module AB-TM1 and second anti blocking time module AB-TM2 are shown. The first and second anti blocking time module are connected to each other via a link L22. The link can, e.g., be a 2Mb link, shared by 32 time slots. Providing a link L22 between the first and the second anti blocking time module creates additional resources for interchanging and/or looping of time slots on terminals of the space module SM1. A possible alternate path via said anti blocking time modules AB-TM1 and AB-TM2 and said link L22 is illustrated in the figure and denoted ap22.

Fig. 2c illustrates yet another embodiment of said anti blocking means AP. In Fig. 2c at least one anti blocking time module is provided, of which anti blocking time module AB-TM1 is shown. Further, in Fig. 2c a number of external terminal devices ET1-ET16 are provided. Said external terminal devices in combination with the anti blocking time modules provides further options for looping or interchanging time slots on terminals of the space module SM. An external terminal link can for example be a terminal which interfaces a time module and a transport link, for example a 2Mb link. An example for an alternate path provided via said anti blocking time modules and said external terminal devices is illustrated in Fig. 2c and is denoted ap23. It is understood that a larger number of external terminal devices or other devices can be connected to each of said at least one anti blocking time module.

Another embodiment of said alternate path means AP is shown in Fig. 2d. Again, a plurality of anti blocking time modules, one of which is shown, is provided. Each of said anti blocking time modules AB-TM are connected to a set of 16 external terminal devices. The set ET1-ET16 is shown. Further, an external link L24 is provided at the external terminal device ET1 for providing additional means for looping or interchanging time slots. A possible alternate path with said anti blocking time modules and external terminal devices for establishing a connection between time slots on terminals of the space module SM is shown in Fig. 2d and denoted ap24.

Yet another embodiment of the alternate path means AP is shown in Fig. 2e. Here, again a plurality of anti blocking time modules, one of which is shown, is provided as well as a plurality of sets of external terminal devices ET1-ET16, each of the sets being connected to one of the anti blocking time modules. An external link L25 is shown connecting the first external terminal device ET1 and the second external terminal device ET2. Another resource for providing a connecting of time slots on terminals of said space module SM is thus provided. A possible alternate path via said anti blocking time modules and external terminal links, denoted ap25 is shown in Fig. 2e. It is understood that a larger number of links between pairs of external terminal devices may preferably be provided.

Also, as an alternative, in the example of Fig. 2e, said path could be provided via two different anti blocking time modules.

It is noted, that possibilities for providing alternate path are not limited to the examples of Fig. 2a to Fig. 2e.

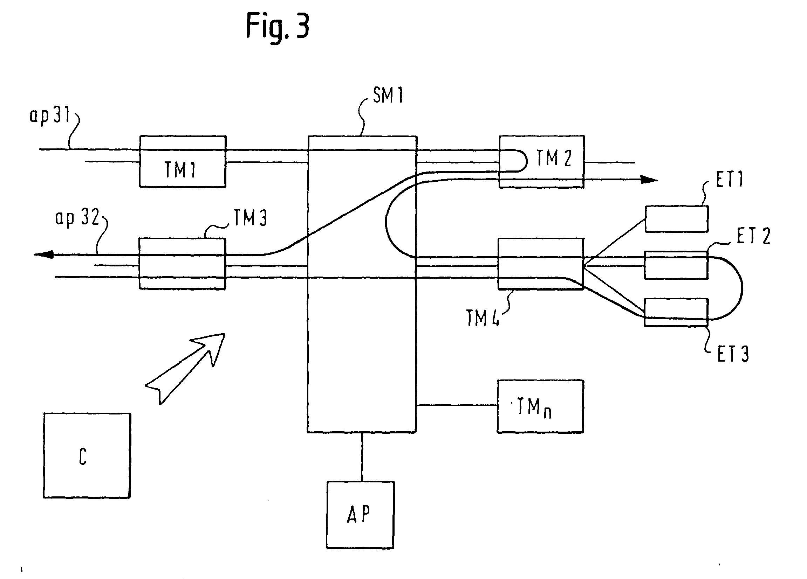

In the following, another embodiment of the invention is described with respect to Fig. 3.

Fig. 3 shows a switching device according to the invention similar to the one shown in Fig. 1. The space module SM1 is connected to a plurality of time modules TM1-TMn. The fourth time module TM4 is connected to three external terminal device ET1 - ET3, as described above and, as before, alternate path means AP are connected to the space module SM1. Said control unit C controls operations of the switching device. As opposed to previous embodiments described with respect to Figs. 1a, 1b and 2a-2e, the current embodiment illustrates an alternate path established via said space module SM1 and said time modules TM1-TMn, and not via said alternate path means AP. For illustration purposes, two alternate paths ap31 and ap32 are shown.

First, steps to establish alternate path ap31 will be described. In a first step a connection request between time slots on the first time module TM1 and the third time module TM3 is registered by the control means C. In a second step it is determined whether a direct path between said time slots is available using the first time module TM1, said space module SM1 and third time module TM3. In the example, it is assumed that a direct path is unavailable. Therefore, in a third step, an alternate path via at least one of the time modules TM1-TMn with sufficiently low load is searched for by said control means C. In the illustrated case, in a fourth step, said control means C establishes the alternate path ap31 via said second time module TM2. Thus, said first alternate path ap31 is routed via said first time module TM1, said space module SM1, said second time module TM2 and said third time module TM3.

In the second example, it is assumed that a connection request between time slots on the third time module TM3 and the second time module TM2 is detected by said control means C. Again, it is assumed, a direct path for a signal on said time slot of the third time module TM3 and the second time module TM2 using said space module SM1 is unavailable. Therefore, said control means C determines an appropriate alternate path via other time modules and/or external devices such as said external terminal devices ET1-ET3. In the shown case, said time slots on the third time module and the second time module could be interchanged by looping said time slots on the fourth time module TM4 and the second and third external terminal device ET2 and ET3. The alternate path established by said control means C is shown by an arrow denoted ap32.

It is noted that in other embodiments of the invention alternate path can be established differently, for example, an alternate path could be established using said alternate path means AP in combination with existing time modules and external devices.

Further, the switching device according to the invention is preferably designed such that it is compatible with prior art switching devices.

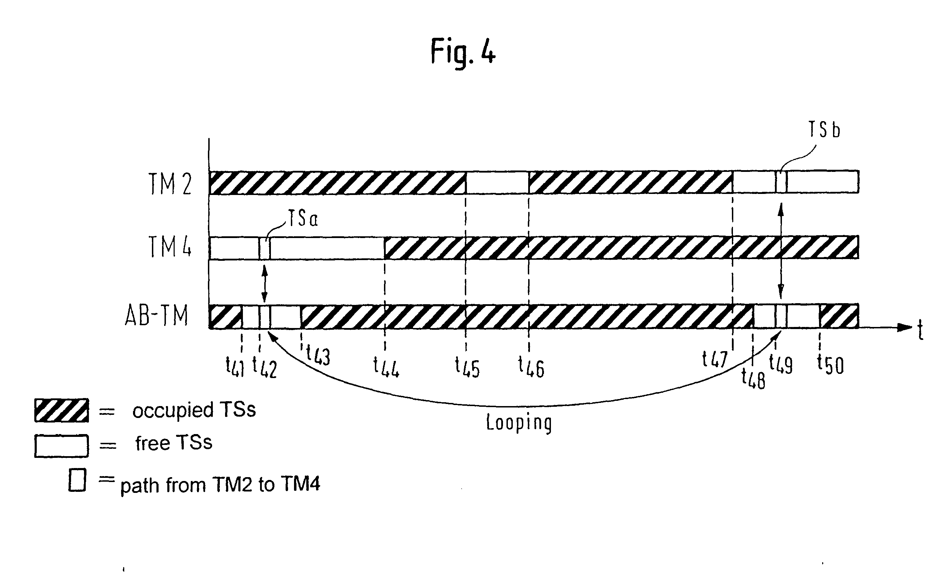

In the following, steps for interchanging a time slot according to an embodiment of the invention is described with respect to the time diagram of Fig. 4. Fig. 4 shows sequences of events within one time frame, i.e., within one time period or unit of transmission time, partitioned into sequential time slots, as outlined above.

It is assumed that a path for data contained in a time slot TSa from the fourth time module TM4 to a time slot TSb on the second time module TM2 is needed. It is also assumed that a direct path for said data between time modules TM4 and TM2 is unavailable and an alternate path is set up via an anti blocking time module AB-TM.

Along a time axis, denoted TM2, the situation at time module TM2 along the time t is illustrated. Periods of time marked by oblique bars illustrate occupied time slots. Thus, before a time instant t45 free time slots are not available at the second time module TM2. Between time instant t45 and time instant t46 free time slots are available at the second time module TM2 and, between said time instant t46 and a time instant t47 said second time module is again occupied. After said time instant t47, free time slots are once again available.

Further, denoted TM4, the situation at the fourth time module TM4 is illustrated. On the fourth time module TM4 free time slots are available before a time instant t44.

Thereafter the fourth time module TM4 is occupied and no time slots are available.

Still further, denoted AB-TM, the situation at the anti blocking time module AB-TM is illustrated. At the anti blocking time module, free time slots are available between time instants t41 and t43 as well as between time instants t48 and t50. Before time instant t41, between time instants t43 and t48 as well as after time instant t50 time slots are unavailable.

The time instants t41 to t50 are named in ascending order, i.e., time instant t41 lies before time instant t42, etc.

It is now assumed that a path for data contained in a time slot TSa from time module TM4 to a time slot TSb on time module TM2 is needed. In the shown example a direct path cannot be provided between the fourth time module TM4 and the second time module TM2. The fourth time module does not have any free time slots available after time instant t44 and the second time module does not have any free time slots available before time instant t45. At a time instant t42, the point in time when TSa is assumed to depart from the fourth time module TM4, the second time module TM2 does not have a free time slot. Even though the content of said time slot TSa can be kept in the fourth time module TM4 up to time instant t44, it still cannot be transferred to the second time module TM2. Therefore, at no point in time both the second time module TM2 and the fourth time module TM4 are available at the same time, i.e., have free time slots.

However, in the example, an alternate path can be established using the anti blocking time module AB-TM. It is possible to shift the contents of time slot TSa at time instant t42 from the fourth time module TM4 to the anti blocking time module AB-TM, having a free time slot available. Then, said content can be temporarily stored in the anti blocking time module AB-TM until a time instant t49, when said content needs to be written during time slot TSb on the second time module TM2. At time instant t49, the contents of the temporarily stored time slot on the anti blocking time module are written to the second time module TM2, during time slot TSb.

In the case shown, an intermediate storing of the contents of time slot TSa on the anti blocking time module AB-TM up to at least time instant t48 is required since at no time before the contents of time slot TSa can be transferred to time module TM2 (and kept there until time instant t49). Only between time instances t48 and t50 interchanging is possible.

In brief, the contents of time slot TSa are transferred to said anti blocking time module AB-TM at time instant t42. Then, said contents are stored in the anti blocking time module AB-TM, preferably in a temporary storage means for the time period from time instant t42 to a time instant t49. At time instant t49 said contents of time slots TSa are written to time module TM2, onto time slot TSb and an alternate path is provided for contents of time slot TSa on time module TM4 towards time module TM2.

It may occur, that the time slot can not be interchanged within the time frame shown in Fig. 4, e.g., if time module TM2 does not provide an free time slot after time instant t47. In this case the contents of time slots TSa are kept until a free time slot appears in the next time frame.

In the following it is assumed that time module TM4 has occupied time slots from 0 to time instant t43. In order to still perform the required interchanging of time slot TSa, in this case it can be tried to move at least one of the occupied time slots to a time slot in the range between t43 and t44. This may be done with an other time module or anti blocking time module, if appropriate time slots are available. If such a movement is possible, the freed time slot or time slots between time instances t41 and t43 can be used for establishing said alternate path.

In a further alternative, if possible, at least one time slot between 0 and time instant t44 on time module TM2 could be moved. For example, in Fig. 4, said time slots could be moved to any time slot between time instances t45 and t46, or to time slots after t47 and subsequently, said alternate path could be directly established between TM2 and TM4 without using an anti blocking time module.

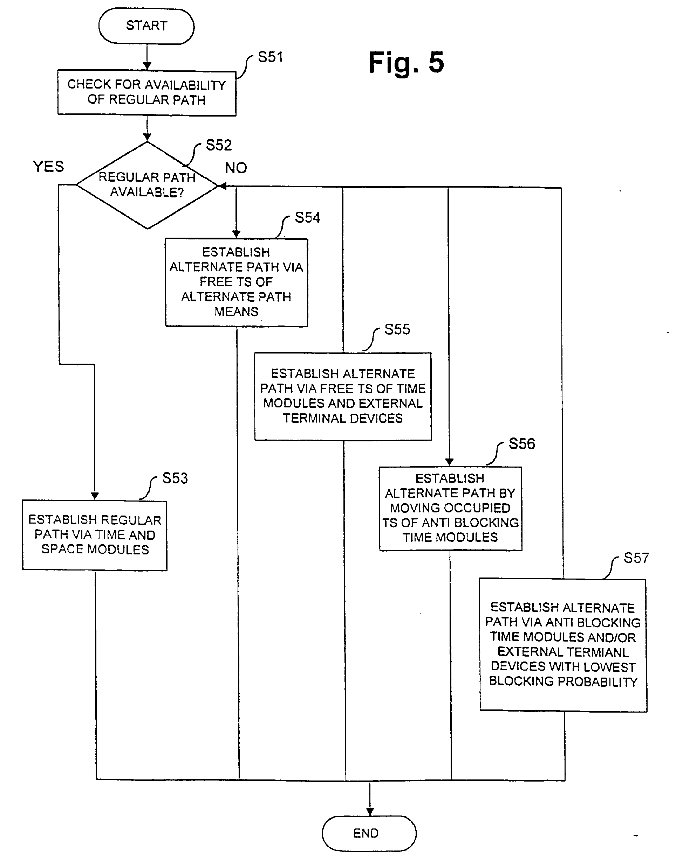

In the following steps for performing the method according to the invention are described with respect to the flow diagram of Fig. 5.

The flow diagram illustrates steps for providing a regular path via the switching device or providing an alternative path via said alternate path means AP. In general it is desired to distribute the load evenly over the switching device. The performed processing steps are controlled by said control means C, which preferably is capable of handling a large number of communication requests, one of which is shown in Fig. 5.

In a first step denoted S51 the control means C checks the availability of a regular path via the time modules TM1 - TMn and space modules SM1, SM2 of the switching device. If in step S52 a regular path is available, in step S53 the connection request is served by setting up a regular path via time modules and space modules of said switching device.

In case a regular path is unavailable, the method of controlling a switching device according to the invention allows several options for establishing an alternate path via said alternate path means AP.

A first alternative is denoted in step S54. Here, an alternate path for a connection request is established via free time slots TS of said alternative path means. This may involve, as it has been described with respect to previous figures, interchanging or looping of time slots in anti blocking time modules and/or external terminal devices and/or external devices and interfaces. Said alternate path is established under control of said control means C.

A second option for setting up an alternate path via said alternate path means AP is described in S55. Here, an alternate path is established via free time slots of time modules TM1-TM4 and external terminal devices ET1-ET16 or other devices, as it has been described with respect to Fig. 3.

In the following a third option for establishing an alternate path via said alternate path means is described with respect to Fig. 5. It is assumed that a request was detected by said control means C for a connection between the first time module TM1 and the second time module TM2. The control means C arranges to use free time slots and time slots occupied by traffic going towards said alternate path means AP as a resource to set up the requested connection.

First, it is tried to set up said connection by moving occupied time slots towards said alternate path means AP by finding at least one pair of new time slots enabling the movement of the link or of the links to said alternate path means. Said new time slots can, for example, be time slots on said plurality of time module and said at least one space module, as it has been described with respect to Fig. 3. If said control means C determines that a movement of occupied time slots in order to establish said connection between the first time module TM1 and the second time module TM2 is not possible, a connection is set up via said alternate path means AP with the use of free time slots towards said alternate path means.

It is noted that this proceeding is possible for any other path for interchanging time slots as well, i.e. loops with external terminal devices or other devices involved.

In the following, a fourth option for establishing an alternate path via said alternate path means AP is described.

Again, it is assumed that a connection request between time slots on the first time module TM1 and the second time module TM2 is detected by said control means C. It is now assumed that said control means has access to information about the load distribution on time modules and space modules and alternate path means AP. Having this knowledge about the load distribution, said control means C now estimates the likelihood for failure of a path set up attempt and thereby minimizes the number of setup efforts by not choosing a path which is likely to be unavailable.

It is noted that in other embodiments the above options may be used in combination with each other, and can, preferably, be at least partially implemented and executed using software.

**Claims**

1.  Switching device for transmission of multiplexed voice and data signals in a communication network, comprising:

    at least one space module (SM1, SM2) including a plurality of terminals (T11 - T1n, T21 - T2n) and means for providing connections between said terminals;
    at least one time module (TM1 - TMn), connected to the plurality of terminals of the at least one space module (SM1, SM2) for switching a plurality of time slots between external devices;

    **characterized by**
    alternate path means (AP; AP1, AP2; AB-TM) connected to the at least one time module (TM1 - TMn) and/or space module (SM1, SM2) for switching arbitrary time slots; and
    control means (C) for establishing a regular connection via at least one of the time modules (TM1 - TMn) and the at least one space module (SM1, SM2), and, in case blocking occurs, providing an alternate path using said alternate path means (AP; AP1, AP2; AB-TM).

2.  Switching device in a communication network according to claims 1, **characterized in that** the at least one space module (SM1, SM2) and the at least one time module (TM1 - TMn) form an arbitrary sequence of time modules and space modules.

3.  Switching device in a communication network according to claims 1 or 2, **characterized in that** said alternate path means (AP; AP1, AP2; AB-TM) comprises at least one anti blocking time module (AB-TM; AB-TM1, AB-TM2) for switching time slots.

4.  Switching device in a communication network according to claims 1 to 3, **characterized in that** said alternate path means (AP; AP1, AP2; AB-TM) include at least one external terminal device (ET1 - ET16) connected to the at least one anti blocking time module (AB-TM; AB-TM1, AB-TM2), for switching time slots on outputs of the at least one anti blocking time module (AB-TM; AB-TM1, AB-TM2).

5.  Switching device in a communication network according to claims 3 or 4, **characterized in that** said alternate path means further comprises means for connecting at least two anti blocking time modules (AB-TM; AB-TM1, AB-TM2) and/or anti blocking external terminal devices (ET1 - ET16) with each other.

6.  Switching device in a communication network according to one of the claims 1 to 5, **characterized in that** the alternate path means (AP; AP1, AP2; AB-TM) is constituted by at least one of said plurality of time modules (TM1 - TMn) and/or external devices connected thereto.

7.  Method of controlling a switching device in a communication network for a transmission of voice and data signals, multiplexed using a plurality of time slots, the switching device including at least one time module (TM1 - TMn), at least one space module (SM1, SM2) and alternate path means (AP; AP1, AP2; AB-TM), and having a plurality of devices connected thereto, the method comprising the following steps:

    checking the availability a free path via the switching device for a requested connection between two devices;
    if a direct path via the at least one time module (TM1 - TMn) and the at least one space module (SM1, SM2) is available, establishing said connection by appropriately interchanging time slots on at least one of the plurality of time modules (TM1 - TMn) and appropriately switching the at least one space module (SM1, SM2); and
    in case a direct path is unavailable, determining and establishing an alternate path between the two devices via said alternate path means (AP; AP1, AP2; AB-TM) involving switching of time slots in said alternate path means for establishing said alternate connection;

8.  Method of controlling a switching device in a communication network according to claim 7, **characterized in that** the alternate path is established via at least one anti blocking time module (AB-TM; AB-TM1, AB-TM2) connected to the at least one space module (SM1, SM2) and/or time module (TM1 - TMn).

9.  Method of controlling a switching device in a communication network according to claims 7 or 8, **characterized in that** said alternate path is established using external terminal devices (ET1 - ET16) connected to said alternate path means (AP; AP1, AP2; AB-TM) or an interface toward a device.

10. Method of controlling a switching device in a communication network according to one of the claims 7 to 9, **characterized in that** the alternate path is established via time modules (TM1 - TMn) and/or external terminal devices with low load.

11. Method of controlling a switching device in a communication network according to one of the claims 7 to 10, **characterized in that** the alternate path is established by using free time slots toward or from said alternate path means (AP; AP1, AP2; AB-TM).

12. Method of controlling a switching device in a communication network according to one of the claims 7 to 11, **characterized in that** the alternate path is established by using time slots occupied by paths for the transmission of signals and by moving said paths to other time slots on said time modules or anti blocking time modules (AB-TM; AB-TM1, AB-TM2) or external terminal means.

13. Method of controlling a switching device in a communication network according to one of the claims 7 to 12, **characterized in that** said alternate path is established via the anti blocking time module (AB-TM; AB-TM1, AB-TM2) with the lowest probability of reject, the probability of reject being determined by said control means (C).

14. Method of controlling a switching device in a communication network according to one of the claims 7 to 13, **characterized in that** said alternate path is established by moving occupied time slots of said time modules (TM1 - TMn) or said anti blocking time modules (AB-TM; AB-TM1, AB-TM2) .

**Patentansprüche**

1. Vermittlungsvorrichtung zur Übertragung gemultiplexter Sprach- und Datensignale in einem Kommunikationsnetzwerk, umfassend:

wenigstens ein Raummodul (SM1, SM2) mit einer Vielzahl von Anschlüssen (T11 - T1n, T21 - T2n) und Einrichtungen zum Bereitstellen von Verbindungen zwischen diesen Anschlüssen;
wenigstens ein Zeitmodul (TM1 - TMn), das mit der Vielzahl von Anschlüssen des wenigstens einen Raummoduls (SM1, SM2) zum Vermitteln einer Vielzahl von Zeitschlitzen zwischen externen Vorrichtungen verbunden ist;

**gekennzeichnet durch**
eine Ausweichpfadeinrichtung (AP; AP1; AP2; AB-TM), die mit dem wenigstens einen Zeitmodul (TM1 - TMn) und/oder Raummodul (SM1, SM2) zum Vermitteln beliebiger Zeitschlitze verbunden ist; und
eine Steuereinrichtung (C) zum Aufbauen einer regulären Verbindung über wenigstens eines der Zeitmodule (TM1 - TMn) und das wenigstens eine Raummodul (SM1, SM2), und, falls ein Blockieren auftritt, zum Bereitstellen eines Ausweichpfades mit Verwenden der Ausweichpfadeinrichtung (AP; AP1, AP2; AP-TM).

2. Vermittlungsvorrichtung in einem Kommunikationsnetzwerk gemäß Anspruch 1, **dadurch gekennzeichnet, dass** das wenigstens eine Raummodul (SM1, SM2) und das wenigstens eine Zeitmodul (TM1 - TMn) eine beliebige Sequenz von Zeitmodulen und Raummodulen bilden.

3. Vermittlungsvorrichtung in einem Kommunikationsnetzwerk gemäß Ansprüchen 1 oder 2, **dadurch gekennzeichnet, dass** die Ausweichpfadeinrichtung (AP; AP1, AP2; AP-TM) wenigstens ein Antiblockier-Zeitmodul (AB-TM; AB-TM1, AB-TM2) zum Vermitteln von Zeitschlitzen umfasst.

4. Vermittlungsvorrichtung in einem Kommunikationsnetzwerk gemäß Ansprüchen 1 bis 3, **dadurch gekennzeichnet, dass** die Ausweichpfadeinrichtungen (AP; AP1, AP2; AP-TM) wenigstens eine externe Endgeräteinrichtung (ET1 - ET16) enthalten, die mit dem wenigstens einen Antiblockier-Zeitmodul (AB-TM; AB-TM1, AB-TM2) verbunden ist, zum Vermitteln von Zeitschlitzen auf Ausgänge des wenigstens einen Antiblockier-Zeitmoduls (AB-TM; AB-TM1, AB-TM2).

5. Vermittlungsvorrichtung in einem Kommunikationsnetzwerk gemäß Ansprüchen 3 oder 4, **dadurch gekennzeichnet, dass** die Ausweichpfadeinrichtung ferner eine Einrichtung zum Verbinden wenigstens zweier Antiblockier-Zeitmodule (AB-TM; AB-TM1, AB-TM2) und/oder von antiblockierenden externen Endgeräteinrichtungen (ET1 - ET16) miteinander umfasst.

6. Vermittlungsvorrichtung in einem Kommunikationsnetzwerk gemäß einem der Ansprüche 1 bis 5, **dadurch gekennzeichnet, dass** die Ausweichpfadeinrichtung (AP; AP1, AP2; AB-TM) durch wenigstens eines der Vielzahl von Zeitmodulen (TM1 - TMn) und/oder damit verbundenen externen Einrichtungen gebildet ist.

7. Verfahren zum Steuern einer Vermittlungsvorrichtung in einem Kommunikationsnetzwerk für eine Übertragung von Sprach- und Datensignalen, die gemultiplext sind unter Verwenden einer Vielzahl von Zeitschlitzen, wobei die Vermittlungsvorrichtung wenigstens ein Zeitmodul (TM1 - TMn), wenigstens ein Raummodul (SM1, SM2) und eine Ausweichpfadeinrichtung (AP; AP1, AP2; AB-TM) umfasst, und mit einer Vielzahl von damit verbundenen Einrichtungen, wobei das Verfahren die folgenden Schritte umfasst zum:

   Überprüfen der Verfügbarkeit eines freien Pfades über die Vermittlungsvorrichtung für eine angeforderte Verbindung zwischen zwei Einrichtungen;
   falls ein direkter Pfad über das wenigstens eine Zeitmodul (TM1 - TMn) und das wenigstens eine Raummodul (SM1, SM2) verfügbar ist, Aufbauen der Verbindung durch angemessenes Vertauschen von Zeitschlitzen auf wenigstens einem der Vielzahl von Zeitmodulen (TM1 - TMn) und angemessenes Vermitteln des wenigstens einen Raummoduls (SM1, SM2); und
   falls ein direkter Pfad nicht verfügbar ist, Bestimmen und Aufbauen eines Ausweichpfades zwischen den zwei Einrichtungen über die Ausweichpfadeinrichtung (AP; AP1, AP2; AB-TM), einschließlich eines Vermittelns von Zeitschlitzen in der Ausweichpfadeinrichtung zum Aufbauen der Ausweichverbindung;

8. Verfahren zum Steuern einer Vermittlungsvorrichtung in einem Kommunikationsnetzwerk gemäß Anspruch 7, **dadurch gekennzeichnet, dass** der Ausweichpfad über wenigstens ein Antiblockier-Zeitmodul (AB-TM; AB-TM1, AB-TM2) aufgebaut wird, das mit dem wenigstens einem Raummodul (SM1, SM2) und/oder Zeitmodul (TM1- TMn) verbunden ist.

9. Verfahren zum Steuern einer Vermittlungsvorrichtung in einem Kommunikationsnetzwerk gemäß Ansprüchen 7 oder 8, **dadurch gekennzeichnet, dass** der Ausweichpfad unter Verwenden externer Endgeräteinrichtungen (ET1 - ET16) aufgebaut wird, die mit der Ausweichpfadeinrichtung (AP; AP1, AP2; AB-TM) oder einer Schnittstelle zu einer Einrichtung verbunden sind.

10. Verfahren zum Steuern einer Vermittlungsvorrichtung in einem Kommunikationsnetzwerk gemäß einem der Ansprüche 7 bis 9, **dadurch gekennzeichnet, dass** der Ausweichpfad über Zeitmodule (TM1 - TMn) und/oder externe Endgeräteinrichtungen mit einer niedrigen Last aufgebaut wird.

11. Verfahren zum Steuern einer Vermittlungsvorrichtung in einem Kommunikationsnetzwerk gemäß einem der Ansprüche 7 bis 10, **dadurch gekennzeichnet, dass** der Ausweichpfad aufgebaut wird durch Verwenden freier Zeitschlitze zu oder von der Ausweichpfadeinrichtung (AP; AP1, AP2; AB-TM).

12. Verfahren zum Steuern einer Vermittlungsvorrichtung in einem Kommunikationsnetzwerk gemäß einem der Ansprüche 7 bis 11, **dadurch gekennzeichnet, dass** der Ausweichpfad aufgebaut wird durch Verwenden von durch Pfade für die Übertragung von Signalen belegten Zeitschlitzen und durch Bewegen der Pfade zu anderen Zeitschlitzen auf den Zeitmodulen oder Antiblockier-Zeitmodulen (AB-TM; AB-TM1, AB-TM2) oder externen Endgeräteinrichtungen.

13. Verfahren zum Steuern einer Vermittlungsvorrichtung in einem Kommunikationsnetzwerk gemäß einem der Ansprüche 7 bis 12, **dadurch gekennzeichnet, dass** der Ausweichpfad aufgebaut wird über das Antiblockier-Zeitmodul (AB-TM; AB-TM1, AB-TM2) mit der niedrigsten Ablehnungswahrscheinlichkeit, wobei die Ablehnungswahrscheinlichkeit durch die Steuereinrichtung (C) bestimmt wird.

14. Verfahren zum Steuern einer Vermittlungsvorrichtung in einem Kommunikationsnetzwerk gemäß einem der Ansprüche 7 bis 13, **dadurch gekennzeichnet, dass** der Ausweichpfad aufgebaut wird durch Bewegen belegter Zeitschlitze der Zeitmodule (TM1 - TMn) oder der Antiblockier-Zeitmodule (AB-TM; AB-TM1, AB-TM2).

**Revendications**

1. Dispositif de commutation pour la transmission de signaux multiplexés de parole et de données sur un réseau de communication, comprenant :

au moins un module spatial (SM1, SM2) comprenant une pluralité de bornes (T11 à T1n et T21 à T2n) et un moyen destiné à fournir des connexions entre lesdites bornes ;

au moins un module temporel (TM1 - TMn), connecté à la pluralité de bornes dudit au moins un module spatial (SM1, SM2) afin de commuter une pluralité d'intervalles de temps entre des dispositifs extérieurs ;

**caractérisé par**

un moyen de trajets alternatifs (AP ; AP1, AP2 ; AB-TM) connecté audit au moins un module temporel (TM1 à TMn) et/ou module spatial (SM1, SM2) afin de commuter des intervalles de temps arbitraires ; et

un moyen de commande (C) destiné à établir une connexion régulière via au moins un des modules temporels (TM1 - TMn) et ledit au moins un module spatial (SM1, SM2) et, s'il se produit un blocage, à fournir un trajet alternatif en utilisant ledit moyen de trajets alternatifs (AP ; AP1, AP2 ; AB-TM).

2. Dispositif de commutation dans un réseau de communication selon la revendication 1, **caractérisé en ce que** ledit au moins un module spatial (SM1, SM2) et ledit au moins un module temporel (TM1 - TMn) forment une séquence arbitraire de modules temporels et de modules spatiaux.

3. Dispositif de commutation dans un réseau de communication selon la revendication 1 ou 2, **caractérisé en ce que** ledit moyen de trajets alternatifs (AP ; AP1, AP2 ; AB-TM) comprend au moins un module temporel anti-bloquant (AM-TM ; AB-TM1, AB-TM2) afin de commuter des intervalles de temps.

4. Dispositif de commutation dans un réseau de communication selon les revendications 1 à 3, **caractérisé en ce que** ledit moyen de trajets alternatifs (AP ; AP1, AP2 ; AB-TM) comprend au moins un dispositif de bornes extérieures (ET1 à ET16) connecté audit au moins un module temporel anti-bloquant (AB-TM ; AB-TM1, 1B-TM2), afin de commuter des intervalles de temps sur des sorties dudit au moins un module temporel anti-bloquant (AB-TM ; AB-TM1, AB-TM2).

5. Dispositif de commutation dans un réseau de communication selon les revendications 3 ou 4, **caractérisé en ce que** ledit moyen de trajets alternatifs comprend en outre un moyen destiné à connecter au moins deux modules temporels anti-bloquants (AB-TM ; AB-TM1, AB-TM2) et/ou dispositifs de bornes extérieures anti-bloquants (ET1 à ET16), l'un à l'autre.

6. Dispositif de commutation dans un réseau de communication selon l'une des revendications 1 à 5, **caractérisé en ce que** le moyen de trajets alternatifs (AP ; AP1, AP2 ; AB-TM) est constitué d'au moins un sur ladite pluralité de modules temporels (TM1 - TMn) et/ou de dispositifs extérieurs connectés sur ceux-ci.

7. Procédé de commande d'un dispositif de commutation, dans un réseau de communication pour l'émission de signaux de parole et de données multiplexés à l'aide d'une pluralité d'intervalles de temps, le dispositif de commutation comprenant au moins un module temporel (TM1 - TMn), au moins un module spatial (SM1, SM2) et un moyen de trajets alternatifs (AP ; AP1, AP2 ; AB-TM) et ayant une pluralité de dispositifs qui y sont connectés, le procédé comprenant les étapes suivantes :

tester la disponibilité d'un trajet libre via le dispositif de commutation pour une connexion demandée entre deux dispositifs ;

si un trajet direct est disponible via ledit au moins un module temporel (TM1 - TMn) et ledit au moins module spatial (SM1, SM2), établir ladite connexion en interchangeant de manière adéquate des intervalles de temps sur au moins un de la pluralité de modules temporels (TM1 - TMn) et en commutant de manière adéquate ledit au moins un module spatial (SM1, SM2) ; et

si un trajet direct n'est pas disponible, identifier et établir un autre trajet entre les deux dispositifs via ledit moyen de trajets alternatifs (AP ; AP1, AP2 ; AB-TM), ce qui suppose la commutation d'intervalles de temps dans ledit moyen de trajets alternatifs afin d'établir ladite connexion alternative.

8. Procédé de commande d'un dispositif de commutation dans un réseau de communication selon la revendication 7, **caractérisé en ce que** le trajet alternatif est établi via au moins un module temporel anti-bloquant (AB-TM ; AB-TM1, AB-TM2) connecté audit au moins un module spatial (SM1, SM2) et/ou module temporel (TM1 - TMn).

9. Procédé de commande d'un dispositif de commutation dans un réseau de communication selon la revendication 7 ou 8, **caractérisé en ce que** ledit trajet alternatif est établi en utilisant des dispositifs de bornes extérieures (ET1 à ET16) connectés audit moyen de trajets alternatifs (AP ; AP1, AP2 ; AB-TM) ou à une interface avec un dispositif.

**10.** Procédé de commande d'un dispositif de commutation dans un réseau de communication selon l'une des revendications 7 à 9, **caractérisé en ce que** le trajet alternatif est établi via des modules temporels (TM1 à TMn) et/ou des dispositifs de bornes extérieurs à faible charge.

**11.** Procédé de commande d'un dispositif de commutation dans un réseau de communication selon l'une des revendications 7 à 10, **caractérisé en ce que** le trajet alternatif est établi en utilisant des intervalles de temps libres en direction ou en provenance dudit moyen de trajets alternatifs (AP ; AP1, AP2 ; AB-TM).

**12.** Procédé de commande d'un dispositif de commutation dans un réseau de communication selon l'une des revendications 7 à 11, **caractérisé en ce que** le trajet alternatif est établi en utilisant des intervalles de temps occupés par des trajets pour la transmission de signaux et en déplaçant lesdits trajets vers d'autres intervalles de temps sur lesdits modules temporels ou lesdits modules temporels anti-bloquants (AB-TM ; AB-TM1, AB-TM2) ou des moyens de bornes extérieures.

**13.** Procédé de commande d'un dispositif de commutation dans un réseau de communication selon l'une des revendications 7 à 12, **caractérisé en ce que** ledit trajet alternatif est établi via le module temporel anti-bloquant AB-TM ; AB-TM1, AB-TM2) ayant la probabilité de rejet la plus faible, la probabilité de rejet étant déterminée par ledit moyen de commande (C).

**14.** Procédé de commande d'un dispositif de commutation dans un réseau de communication selon l'une des revendications 7 à 13, **caractérisé en ce que** ledit trajet alternatif est établi en déplaçant des intervalles de temps occupés desdits modules temporels (TM1 à TMn) ou desdits modules temporels anti-bloquants (AB-TM ; AB-TM1, AB-TM2).

Fig. 1a

# Fig. 1b

EP 1 018 273 B1

Fig. 2a

Fig. 2b

Fig. 2c

Fig. 2d

Fig. 2e

# Fig. 3

EP 1 018 273 B1

Fig. 4

# Fig. 5

START

S51

CHECK FOR AVAILABILITY
OF REGULAR PATH

S52

YES    REGULAR PATH    NO
AVAILABLE?

S54

ESTABLISH
ALTERNATE PATH VIA
FREE TS OF
ALTERNATE PATH
MEANS

S55

ESTABLISH ALTERNATE
PATH VIA FREE TS OF TIME
MODULES AND EXTERNAL
TERMINAL DEVICES

S56

ESTABLISH
ALTERNATE PATH BY
MOVING OCCUPIED
TS OF ANTI BLOCKING
TIME MODULES

S53

ESTABLISH REGULAR
PATH VIA TIME AND
SPACE MODULES

S57

ESTABLISH ALTERNATE
PATH VIA ANTI BLOCKING
TIME MODULES AND/OR
EXTERNAL TERMIANL
DEVICES WITH LOWEST
BLOCKING PROBABILITY

END

# Fig. 6

Prior Art